(19) Europäisches Patentamt
European Patent Office
Office européen des brevets

(11) **EP 1 043 271 A1**

(12) **EUROPEAN PATENT APPLICATION**

(43) Date of publication:
**11.10.2000 Bulletin 2000/41**

(51) Int. Cl.[7]: **C01B 3/38**, B01J 8/02,
C01B 3/32

(21) Application number: **00201138.5**

(22) Date of filing: **29.03.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **30.03.1999 EP 99302490** | (71) Applicant:<br>**SHELL INTERNATIONALE RESEARCH MAATSCHAPPIJ B.V.**<br>**2596 HR Den Haag (NL)**<br><br>(72) Inventor:<br>**Wentinck, Hendrik Martinus**<br>**1031 CM Amsterdam (NL)** |

(54) **Apparatus for the catalytic partial oxidation of hydrocarbons**

(57) The invention relates to an apparatus suitable for the catalytic partial oxidation of a hydrocarbonaceous feedstock, comprising a synthesis gas collection vessel (1), and a manifold of reactors (5) each comprising a mixer and a catalyst bed suitable for the partial oxidation, wherein the reactors are substantially vertically mounted on the synthesis gas collection vessel with the mixer above the catalyst bed, and to a catalytic partial oxidation process using such an apparatus.

Fig.1.

EP 1 043 271 A1

## Description

The present invention relates to an apparatus suitable for the catalytic partial oxidation of a hydrocarbonaceous feedstock and to a catalytic partial oxidation process using this apparatus.

The partial oxidation of hydrocarbonaceous feedstocks, in particular hydrocarbons, in the presence of a catalyst is an attractive route for the preparation of mixtures of carbon monoxide and hydrogen, normally referred to as synthesis gas. The partial oxidation of paraffinic hydrocarbons is an exothermic reaction represented by the equation:

$$C_nH_{2n+2} + n/2 \; O_2 \rightarrow n \; CO + (n+1) \; H_2$$

There is literature in abundance on the catalysts and the process conditions for the catalytic partial oxidation of gaseous hydrocarbons, in particular methane. Reference is made, for instance, to EP-A-303 438, US-A-5,149,464, and International patent application WO 92/11199.

For successful operation at a commercial scale, the catalytic partial oxidation process must be able to achieve a high conversion of the hydrocarbon feedstock at very high throughputs. In the art, the catalytic partial oxidation of gaseous hydrocarbons at a gas hourly space velocity in the order of 1,000,000 Nl/kg/h or more is known, for example from US-A-5,648,582.

In catalytic partial oxidation processes, a pre-heated mixture of a hydrocarbonaceous feedstock and a oxygen-containing gas, typically in amounts giving an oxygen-to-carbon ratio in the range of from 0.3 to 0.8, is formed at elevated pressure and led to the partial oxidation zone, i.e. the catalyst. Such mixtures at such conditions are highly reactive and explosive.

Therefore, it is important to avoid uncontrolled gas-phase reactions, in particular ignition and the occurrence of flames, in the mixing zone of a catalytic partial oxidation reactor. The mixing zone is the zone upstream of the partial oxidation zone wherein hydrocarbonaceous feedstock and oxygen-containing gas are both present. Thus, the residence time of the feed mixture in the mixing zone should be below the auto ignition delay time of that mixture. Flash-back of flames from the catalyst to the mixing zone should be avoided and oxygen-rich zones in the mixing zone should be minimised.

Further, since the catalytic partial oxidation reaction proceeds at very short contact times (in the order of tens of milliseconds), it is necessary that the reactants are well-mixed when contacting the catalyst. Otherwise, the reaction will proceed at an undesirable stoichiometry and the desired product selectivity will not be obtained. Also, in order to avoid thermomechanical stresses in the catalyst bed, the mixture entering the partial oxidation zone should be well-mixed.

For a single mixer, the residence time of the feed mixture in the mixing zone depends on the ratio of mixer volume and throughput of feed mixture. However, the linear velocity of the feed mixture through the catalyst bed is bound to an upper limit, in order to limit the pressure drop over the catalyst bed. Therefore, also the linear velocity of the feed mixture leaving the mixer, and thus the throughput of feed mixture, is bound to an upper limit. Thus, it is evident that, in order to fulfil the residence time requirement without exceeding the maximum velocity, a mixer having a small volume is preferred. In order to match the velocities required in the mixer and in the catalyst bed, the downstream part of the mixer is preferably in the form of a diffuser, or a diffuser is placed between the mixer and the catalyst bed. The volume of a single mixer can for example be minimised by placing a non-porous insert in the mixing zone, such as disclosed in WO 98/30322.

To obtain the throughput of feed mixture required for a large scale operation, a plurality of small volume mixers is typically used. Alternatively, a larger mixer having a plurality of mixing nozzles or a plurality of inlet holes for at least one of the reactants may be used, thus creating a plurality of smaller mixing areas. Catalytic partial oxidation reactors having a plurality of relatively small mixers are known in the art, for example from EP-A 303 438/439 and WO 98/49095.

In EP-A-303 438 and EP-A-303 439 a reactor is disclosed having a plurality of small mixers upstream of a larger partial oxidation zone comprising a sequence of catalyst discs in the form of honeycomb monoliths. A similar configuration, i.e. a plurality of small mixers upstream of a larger catalytic partial oxidation zone in the form of a fixed bed of catalyst, has been disclosed in WO 98/49095. In both publications, the feed components are well-mixed before contacting the catalytic partial oxidation zone and the residence time of the feed mixture in the mixing zone is below the auto ignition delay time.

A disadvantage of a plurality of small mixers upstream of a larger fixed bed of catalyst is that recirculation zones easily occur between the exits of adjacent mixers. In recirculation zones, residence time is high, resulting in the danger of auto ignition.

Another disadvantage of the use of a plurality of small mixers upstream of a larger fixed bed of catalyst is the relative high sensitivity to mechanical failure of the catalyst bed. Especially in the case of a catalyst bed in the form of ceramic foam, high pressure drops over the catalyst bed can occur, resulting in high mechanical stresses over the catalyst bed, whereas the possibilities for support are minimal due to the relatively large diameter. In addition, thermal stresses within the catalyst bed are high, due to the large diameter.

Thus, there is a need in the art for a catalytic partial oxidation reactor that does not alone fulfil the above-mentioned safety requirements for the mixing zone, but wherein also mechanical failure of the catalyst bed is minimised.

It has been found that the above-mentioned requirements can be fulfilled by performing the catalytic partial oxidation process in an apparatus comprising a synthesis gas collection vessel that is provided with a manifold of reactors, each comprising a mixer and a catalyst bed.

Thus, the present invention relates to a apparatus for the catalytic partial oxidation of a hydrocarbonaceous feedstock, comprising

    (1) a synthesis gas collection vessel, and
    (2) a manifold of reactors each comprising a mixer and a catalyst bed,

wherein the reactors are mounted on the synthesis gas collection vessel with the mixer above the catalyst bed.

It has been found advantageous that each mixer is provided with a catalyst bed. Thus, it is relatively straightforward to obtain a good alignment between the mixer or diffuser exit and the catalyst bed, thereby preventing recirculation zones. Due to their relatively small size, the catalyst beds can be relatively well supported, thus reducing the risk of mechanical failure. Moreover, if failure of one of the catalyst beds occurs, this will not result in a mandatory shut-down of the process.

In the apparatus according to the present invention, a manifold of reactors, each comprising a mixer and a catalyst bed, is mounted on a synthesis gas collection vessel. Each mixer is fed, via conduits or the like, with the reactants, i.e. a hydrocarbonaceous feedstock and an oxygen-containing gas, optionally together with other components. The feed mixture formed in the mixer is fed to the catalyst bed of the same reactor, where it is converted into hot synthesis gas. The reactors are mounted in the wall of the synthesis gas collection vessel, such that the conduits for feeding the reactants are located at the outside of the vessel and the downstream surface of the catalyst bed is in fluid communication with the inside of the vessel. The hot synthesis gas is collected in the vessel before it flows via an outlet to a cooler.

The reactors are mounted in such a position that, in the case of mechanical failure of a catalyst bed, particles of the bed will fall to the bottom of the synthesis gas collection vessel, without touching the mixer. Thus, the reactors are mounted in a top-down position, i.e. with the mixer above the catalyst bed. Preferably, the angle between the longitudinal axis of the catalyst bed and the vertical is maximum 60°, more preferably maximum 45°. The mounting in top-down position is preferably achieved by positioning a reactor with its longitudinal axis perpendicular to the wall, in a substantial horizontal wall of the synthesis gas collection vessel, for example in the top wall of the vessel. However, diagonal positioning of the reactors in a substantial vertical wall of the vessel is also possible.

The synthesis gas collection vessel of the apparatus of the invention may be any vessel suitable for the collection of hot synthesis gas. Suitable synthesis gas collection vessels are known in the art of gasification processes. Typically, these vessels are made of low-steel alloys, for example chromium molybdenum alloys. To protect the vessel wall against the temperature of the hot synthesis gas, the inner surface of such vessels is typically provided with a refractory liner, for example refractory bricks, or with a water-cooled membrane.

The inner surface of the bottom of the synthesis gas collection vessel according to the invention must be able to withstand the temperature of hot particles from failed catalyst beds. Therefore, the inner surface of the synthesis gas collection vessel bottom is preferably protected by a heat-resistant material, for example refractory bricks such as known in the art of gasification processes.

It is an advantageous aspect of the apparatus according to the present invention that, in the case of failure of one of the catalyst beds, the process can be continued. Ideally, the supply of feed mixture to the reactor comprising the failed catalyst bed would be stopped as soon as possible after the failure. However, it will be appreciated that, during a short time after failure, a certain slippage of unreacted feed mixture through the failed catalyst bed into the synthesis gas collection vessel cannot be avoided. In order to minimise damage to the apparatus, the synthesis gas collection vessel is suitably large enough to allow slipped feed mixture to burn almost completely in the direct environment of the mixer, without the flames reaching the synthesis gas collection vessel outlet or other downstream parts of the apparatus, such as a cooler. It will be appreciated that the flame length from flames evolving from a damaged reactor, and therewith the preferred dimensions of the synthesis gas collection vessel, will mainly depend on the temperature of the synthesis gas in the collection vessel and the radius of the mixer.

In a specific embodiment of the apparatus of the invention, the reactors are mounted on the synthesis gas collection vessel, relatively close to each other, such that a compact apparatus is obtained. Suitably, the distance between the central longitudinal axes of adjacent reactors is less than three times the largest catalyst bed diameter, preferably less than two times the largest catalyst bed diameter, more preferably less than 1.5 times. In order to obtain a apparatus that is as compact as possible, the reactors are preferably mounted such that each reactor penetrates through the vessel wall at the point where its diameter is smallest. In this embodiment, the means for mounting the reactors may be located at the inside or at the outside of the synthesis gas collection vessel. An advantage of this embodiment is that a compact apparatus is obtained which can be carried out as a mobile/transportable apparatus, which is easily transportable for maintenance or other purposes.

In another specific embodiment of the apparatus of the invention, the manifold of reactors is mounted in such a way on the synthesis gas collection vessel that the reactors can be replaced independently from each other. An advantage of this embodiment is that damaged catalysts can be replaced during hot standby. The independent replaceability of the reactors requires that the hole through which a reactor penetrates the vessel wall has at least the diameter of the reactor at its largest point, otherwise the reactor cannot be removed to the outside of the vessel. In this embodiment, each reactor is provided, at the outside of the vessel, with means for mounting the reactor on the vessel. Suitably, the means for mounting the reactor comprises a flange or the like, which has a larger diameter than the hole in the vessel wall through which the reactor is mounted. As a consequence, the distance between two adjacent reactors in this embodiment is typically in the order of two or three times the catalyst bed diameter or larger.

The hot synthesis gas that is collected in the vessel flows via an outlet of the vessel to means suitable for cooling synthesis gas.

The hot synthesis gas produced may be cooled by a conventional synthesis gas cooler, such as a multi tubular cooler, or by a water quench. Multi tubular coolers and water quenches are known in the art. A multi tubular cooler may be vertically or horizontally mounted on the synthesis gas collection vessel. Especially in the case of a compact, transportable apparatus, a horizontally-mounted cooler is preferred to facilitate replacement of the apparatus. Also, this results in a low point of gravity which is desirable for barge-mounted apparatuses.

Alternatively, the hot synthesis gas may be cooled by means of an endothermic reaction unit, such as for example a steam methane reforming unit. Steam methane reforming units are known in the art. An example of a very suitable steam methane reforming unit is a unit comprising a plurality of reformer tubes filled with catalyst, such as disclosed in for example US 4,741,885. In order to act as a means for cooling the synthesis gas, the endothermic reaction unit is mounted on the synthesis gas collection vessel in such a way that the hot synthesis gas produced can contact the endothermic reaction zone externally and can thus provide the heat required for the endothermic reaction. By contacting an endothermic reaction unit, the temperature of the synthesis gas will typically be reduced from about 900-1100 °C to about 500-600 °C. Optionally, the synthesis gas leaving the endothermic reaction unit may be further cooled by a conventional synthesis gas cooler or a water quench. In the case that a steam reforming unit having a plurality of reformer tubes is used as synthesis gas cooler, the reforming unit is preferably vertically mounted on the upper part of the synthesis gas collection vessel.

The reactors of the apparatus of the present invention may comprises any type of suitable mixer. Mixers suitable for forming a pre-heated mixture of hydrocarbons and an oxygen-containing gas are known in the art of catalytic partial oxidation (reference is made to EP-A-303 438 and WO 98/49095).

Further, the type of mixers known in the art acetylene production, a process wherein a pre-heated mixture of hydrocarbons, typically methane, and an oxygen-containing gas is formed to feed the burning chamber wherein acetylene is produced, may suitably be used in the reactors of the apparatus according to the present invention. Due to the relatively low pressure applied during the acetylene production process, these mixers usually have a relatively large volume. In order to limit the risk of explosions at the higher pressures applied in the catalytic partial oxidation process, mixers designed for the acetylene production will have to be scaled-down before being applied in the catalytic partial oxidation process.

Examples of suitable types of mixers are cross-flow mixers, co-annular mixers, rotating mixers, i.e. mixers creating a swirl component in the flow of the mixture formed. Mixers comprising an insert in order to minimise the mixing volume, such as disclosed in WO 98/30322, can very suitably be used in the apparatus according to the present invention. It is a particular advantage of the apparatus of the present invention that mixers comprising a converging diffuser exit can be used with a far decreased risk of the occurrence of recirculation zones, and thus auto-ignition.

The reactors of the apparatus of the present invention comprise a catalyst bed that is suitable for the partial oxidation of a hydrocarbonaceous feedstock. The catalyst bed typically comprises catalytically active material supported on a catalyst carrier in a fixed arrangement.

Catalyst compositions suitable for the use in the partial oxidation of hydrocarbonaceous feeds are known in the art. Such catalysts generally comprises, as the catalytically active material, a metal selected from Group VIII of the Periodic Table of the Elements. References in this specification to the Periodic Table of the Elements are to the CAS version, as published in the CRC Handbook of Chemistry and Physics, 68th Edition. Catalysts comprising, as the catalytically active component, a metal selected from rhodium, iridium, palladium and platinum are preferred. Catalysts comprising rhodium or iridium are most preferred. Suitable carrier materials are well known in the art and include refractory oxides, such as silica, alumina, titania, zirconia and mixtures thereof, and metals. High-alloy, alumina-containing steel, such as fecralloy-type materials are particularly suitable metals. The catalyst may comprise the catalytically active metal in any suitable amount to achieve the required level of activity. Typically, the catalyst comprises the active metal in an amount in the range of from 0.01 to 20% by weight, preferably from 0.02 to 10% by weight, more preferably from 0.1 to 7.5% by weight. In addition to the catalytically active material, the catalyst may comprise a promoter or performance-enhancing compound. Suitable promoters are known in the art.

The fixed arrangement may have any suitable form, provided that the arrangement is permeable to gas. The arrangement suitably has a void fraction in the range of from 0.4 to 0.95, preferably in the range of from 0.6 to 0.9. Examples of suitable fixed arrangements are a fixed bed of catalyst carrier particles, such as refractory oxide particles, an arrangements of metal wires or gauzes, or a porous metal or ceramic monolithic structure, such as a honeycomb or a foam, or combinations thereof. A preferred catalyst bed is in the form of a ceramic foam. Suitable ceramic foams are commercially available. Preferred ceramic foams have a number of pores per cm in the range of from 20 to 120, more preferably in the range of from 25 to 100 pores per cm. It has been found a particular advantage of the apparatus of the present invention that catalyst beds that have an intrinsically weak mechanical strength, such as ceramic monoliths, can be used with a minimised risk of mechanical failure. Especially, in the case of catalyst beds showing a relatively high pressure drop over the catalyst bed, such as small pore ceramic foams, the improved possibilities for support of the catalyst bed in the apparatus of the invention are advantageous.

The catalyst bed may be connected to the mixer by means known in the art, for example by means of a catalyst mounting as disclosed in WO 98/05423.

Preferably, the reactors are monitored in order to detect failure of any of the catalyst beds. Rapid detection of failure is important in order to be able to stop the supply of feed mixture through the failed catalyst bed as soon as possible and thus avoid the presence of highly reactive and explosive feed mixture within the synthesis gas collection vessel. Failure of a catalyst bed will result in a flame evolving from the mixer of the failed reactor. Detection of those flames can suitably be done by monitoring radiation or fluctuations in radiation, for example by means of a sensor behind a sapphire or quartz window or an optical fibre positioned in the centre of the bottom of the synthesis gas collection vessel.

Burn-out of the mixers can be monitored by thermocouples connected to the mixers. In view of data reduction, the thermocouples are preferably connected in series to form a thermopile, wherein each thermopile covers a group of mixers that can be shut-off after detection of failure.

The apparatus of the invention will now be illustrated in a non-limiting manner with reference to the schematic Figures 1 to 6. The Figures are not drawn to scale.

Figure 1 is a longitudinal section of a compact apparatus according to the invention.
Figure 2 is a schematic top view of the apparatus of Figure 1.

Figure 3 is an enlargement of a longitudinal section of a reactor of the apparatus of Figure 1.
Figure 4 is a longitudinal section through the line A-A (see Figure 6) of an apparatus according to the invention comprising independently replaceable reactors and a vertically mounted steam methane reforming unit.
Figure 5 is an enlargement of a longitudinal section through the line B-B (see Figure 6) of a reactor of the apparatus of Figure 4.
Figure 6 is a schematic top view of the apparatus of Figure 4.

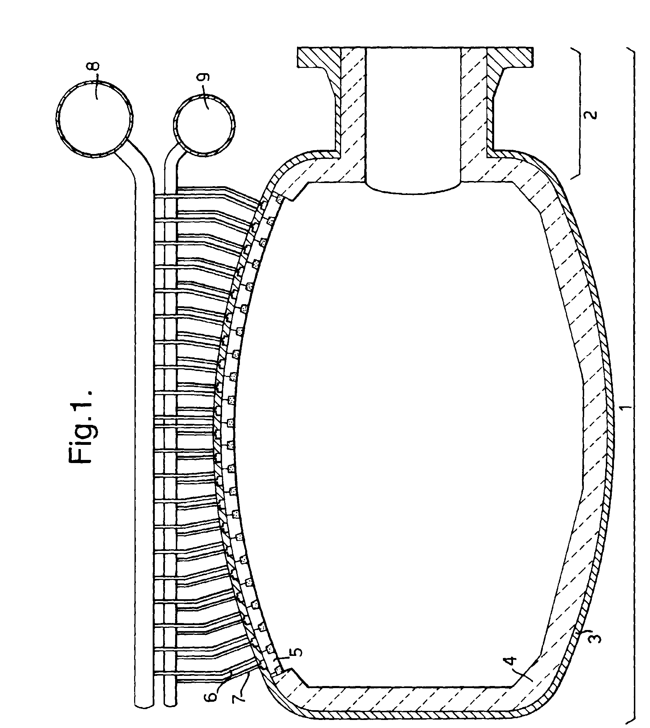

The apparatus in Figure 1 comprises a synthesis gas collection vessel 1 having a synthesis gas outlet 2. The synthesis gas collection vessel has a steel wall 3. The inside of the steel wall 3 is protected by a refractory liner 4. Via outlet 2, hot synthesis gas will flow to a synthesis gas cooler (not shown).

In the upper part of the synthesis gas collection vessel, a manifold of reactors 5, each comprising a mixer and a catalyst bed, is mounted in the synthesis gas collection vessel wall 3. The reactors are mounted in such a way that the mixer is positioned above the catalyst bed. Each reactor 5 is provided with conduits 6 and 7, for supplying hydrocarbonaceous feedstock and oxygen-containing gas, respectively, to the mixer. Conduits 6 and 7 are fed with hydrocarbonaceous feedstock and oxygen-containing gas by feed distributor systems 8 and 9, respectively.

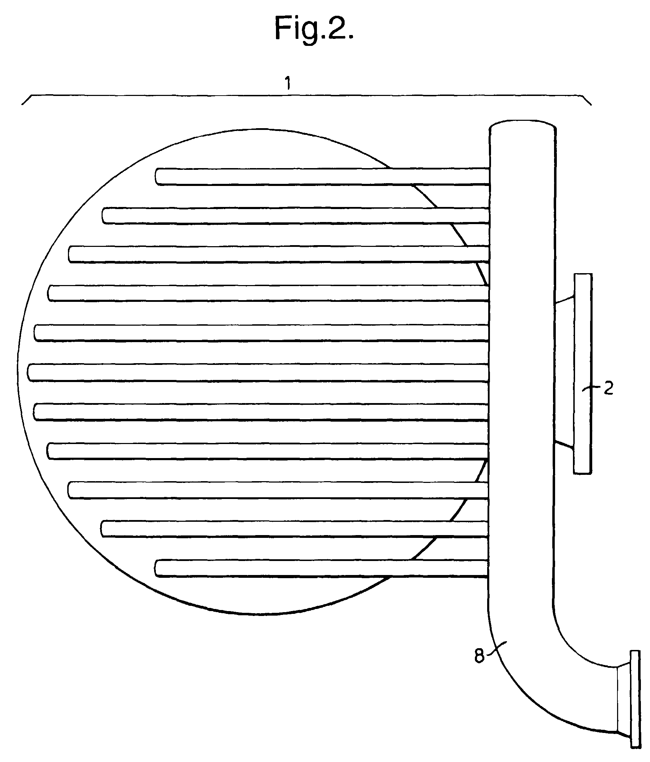

Figure 2 is a schematic top view of the apparatus of Figure 1, showing the shape of synthesis gas collection vessel 1. The feed distributor system 8 for the hydrocarbonaceous feedstock is shown. Not shown are the feed distributor system 9 for the oxygen-containing gas and the conduits 6 and 7 for supplying the reactants from the feed distributor systems 8 and 9 to the reactors 5.

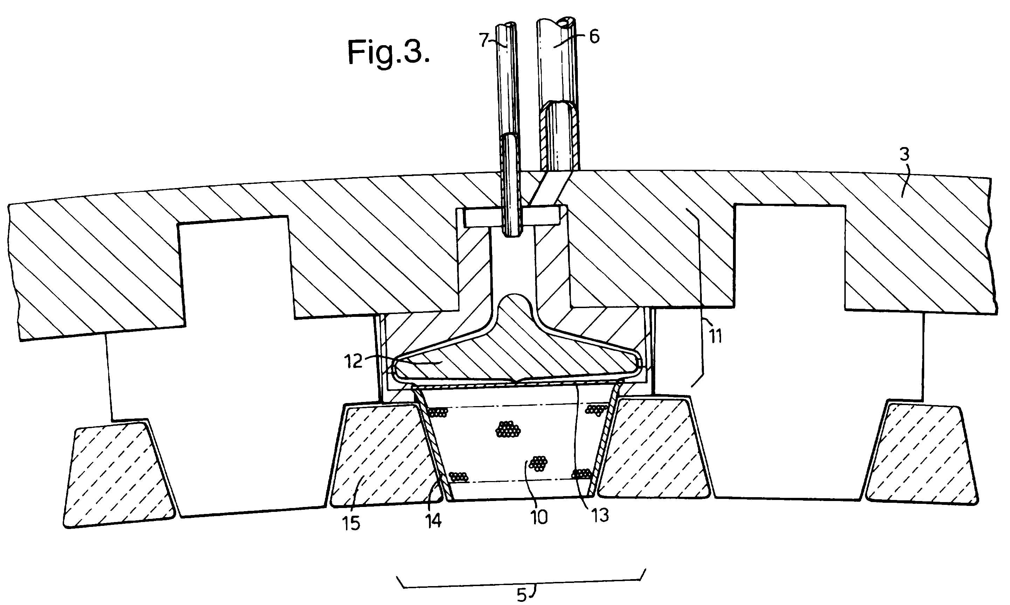

Figure 3 is an enlargement of a reactor 5 of the apparatus of Figure 1. The reactor 5 comprises a catalyst bed 10 in the form of a ceramic foam and a mixer 11 which comprises a non-porous insert 12 in order to minimise the volume of the mixing zone. Just upstream of the catalyst bed 10, at the downstream end of the mixing zone, a porous shield 13 is placed to improve the velocity profile of the feed mixture, and so minimising unintentional ignition. The catalyst bed 10 is connected to the mixer 11 by means of catalyst mounting 14. The mixer 11 may be connected to the vessel wall 3 by means known in the art, for example by a bayonet connection (not shown). The parts of the mixer which could be directly exposed to hot synthesis gas are protected by means of pieces of refractory 15, which are fixed to the mixer 11 by means of an anchor (not shown) made of a relatively high-alloy steel, such as for example 'Haynes 230'. It will be appreciated that other connecting means known in the art may alternatively be used.

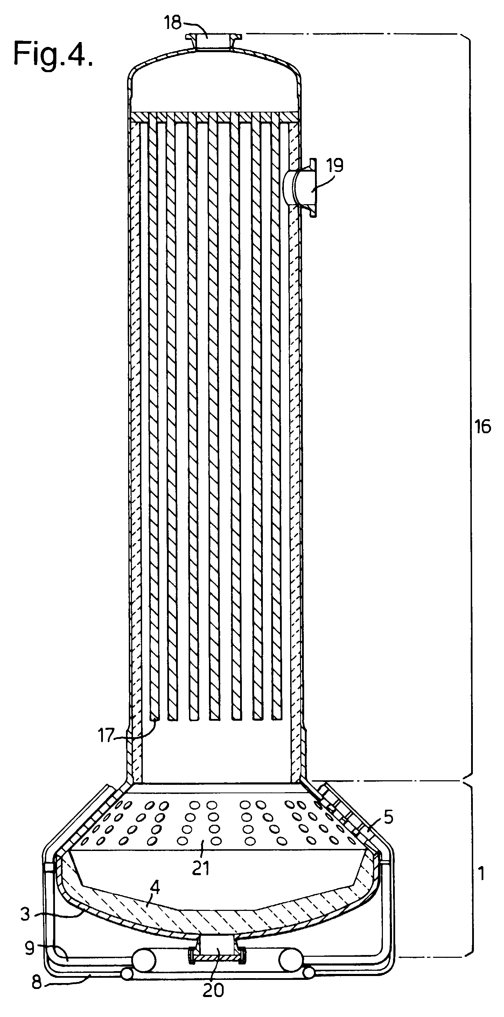

Figure 4 shows another embodiment of the apparatus according to the invention. The apparatus of Figure 4 comprises a synthesis gas collection vessel 1, a manifold of reactors 5 that are mounted in the synthesis gas collection vessel wall 3 in such a way that they can be replaced independently from each other, and a steam methane reforming reaction unit 16 that is vertically mounted on the synthesis gas collection vessel 1. The stream methane reforming reaction unit 16 comprises a plurality of reformer tubes 17 filled with catalyst (not shown). Via inlet 18, the reactants for the steam reforming reaction, i.e. methane and steam, are fed to the catalyst filled tubes 17. The reformer tubes 17 are open-ended. Hot synthesis gas produced in the catalyst beds of reactors 5 flows into the steam methane reforming reaction unit 16, there heating externally the reformer tubes 17. The reaction unit 16 comprises an outlet 19 via which the synthesis gas produced in both the catalyst beds of the reactors 5 and the reformer tubes 17 flows to a synthesis gas cooler (not shown).

The synthesis gas collection vessel 1 of the apparatus of Figure 4 further comprises a man hole 20, to create the possibility of access to the inside of the vessel. The inner surface of the upper part of the synthesis gas collection vessel wall 3, i.e. the part wherein the reactors 5 are mounted, is lined with a water-cooled membrane 21 in order to protect the wall against hot synthesis gas.

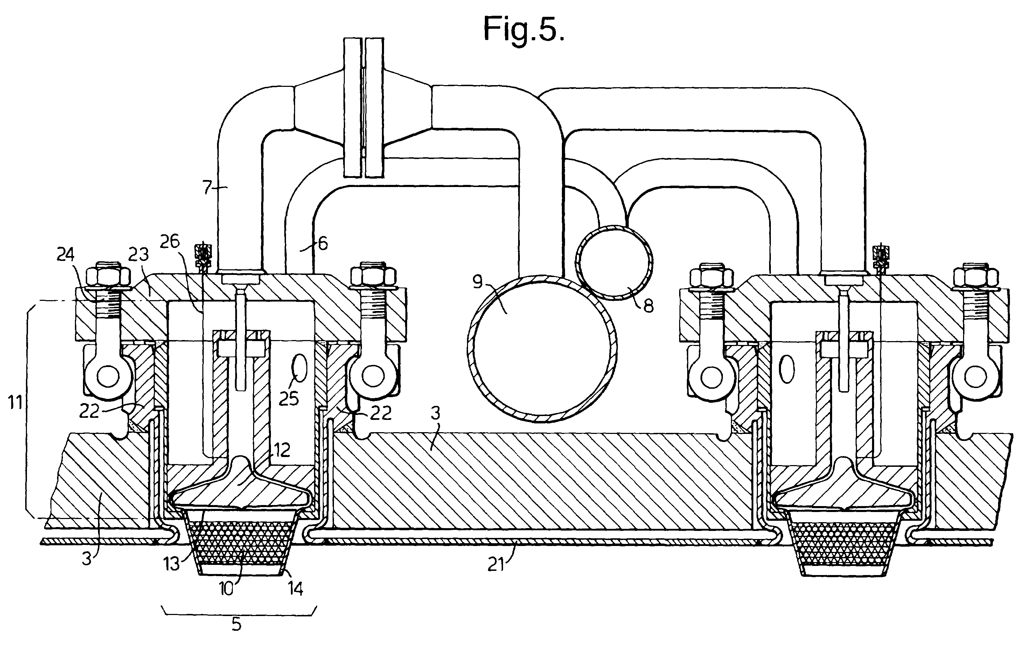

Figure 5 is an enlargement of a cross-section of two independently replaceable reactors 5 of the apparatus of Figure 4 through the plane B-B. The reactor 5 is mounted in the synthesis gas collection vessel wall 3 such that it penetrates the wall at the point where its diameter is largest. In the embodiment shown in Figure 4, the reactor has its largest diameter at the height of the mixer insert 12. By means of a metal neck 22 that is welded to the steel vessel wall 3, a flange 23 and means 24 for connecting the flange to the neck, the reactor is mounted on the vessel wall 3. The hydrocarbon feedstock supplied by conduit 6 enters the mixing zone through inlet hole 25. The temperature in the mixer is measure by means of a thermocouple 26. The conduits 6 and 7 of each reactor are connected to hydrocarbon feedstock distributor system 8 and oxygen-containing gas distributor 9, respectively, from which the respective reactants are distributed to the different mixers 11. In order to be able to replace the reactors from the outside of the synthesis gas collection vessel, the distributors are preferably placed between the reactors 5.

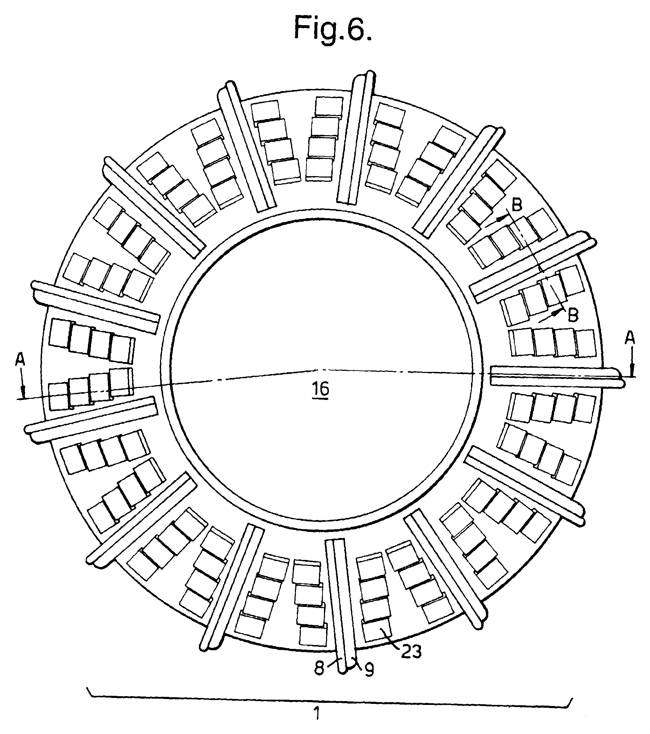

The location of the distributors 8 and 9 is shown more clearly in Figure 6, which is a schematic top view of the apparatus of Figure 4. Not shown are the conduits 6 and 7 that provide the reactants to the individual mixers.

The present invention further relates to a process for the catalytic partial oxidation of a hydrocarbonaceous feedstock, which process comprises contacting each catalyst bed of the apparatus according to the invention with a feed mixture comprising a hydrocarbonaceous feedstock and an oxygen-containing gas in amounts giving an oxygen-to-carbon ratio in the range of from 0.3 to 0.8, at a pressure in the range of from 2 to 150 bara, a temperature in the range of from 750 to 1400 °C and a gas space velocity in the range of from 20,000 to 100,000,000 Nl/kg/h. Reference herein to temperature is to the temperature of the gas leaving the catalyst bed.

The hydrocarbonaceous feedstock is in the gaseous phase when contacting the catalyst bed. The feedstock may contain compounds that are liquid and/or compounds that are gaseous under standard conditions of temperature and pressure (i.e. at 0 °C and 1 atm.).

The process is particularly suitable for the partial oxidation of methane, natural gas, associated gas or other sources of light hydrocarbons. In this respect, the term "light hydrocarbons" is a reference to hydrocarbons having from 1 to 5 carbon atoms. The process may be advantageously applied in the conversion of gas from naturally occurring reserves of methane which contain substantial amounts of carbon dioxide. The feed preferably comprises methane in an amount of at least 50% by volume, more preferably at least 70% by volume, especially at least 80% by volume.

The process is also suitable for the conversion of feedstocks being gaseous when contacting the catalyst bed during operation, but being liquid under standard conditions of temperature and pressure. Typically, these feedstocks have an average carbon number of at least 6 and contain up to 25 carbon atoms in their molecules. Examples of such feedstocks are hydrocarbon feedstocks boiling in the range of from 50 °C to 500 °C, preferably in the range of from 60 °C to 350 °C. The process is particular suitable for the partial oxidation of liquid hydrocarbon feedstocks, such as naphtha feedstocks boiling between 35 °C and 150 °C, kerosene feedstocks boiling between 150 °C and 200 °C or synthetic gas oil feedstocks boiling between 200 °C and 500 °C, in particular between 200 °C and 300 °C.

The process according to the present invention can also be carried out when the feedstock contains oxygenates (being gaseous and/or being liquid under standard condition of temperature and pressure). Oxygenates to be used as (part of) the feedstock in the process according to the present invention are defined as molecules containing apart from carbon and hydrogen atoms at least 1 oxygen atom which is linked to either one or two carbon atoms or to a carbon atom and a hydrogen atom. Examples of suitable oxygenates comprise methanol, ethanol, dimethyl ether and the like.

Also mixtures of hydrocarbons and oxygenates as defined hereinbefore can be used as feedstock in the process according to the present invention.

The hydrocarbonaceous feedstock is contacted with the catalyst bed as a mixture with an oxygen-containing gas. Suitable oxygen-containing gases are air, oxygen-enriched air or pure oxygen. The feed mixture may optionally comprise steam. Optionally, the feed mixture may comprise carbon dioxide in a concentration of up to 60% by volume of the total feed mixture.

In each mixer of the apparatus according to the present invention, the hydrocarbonaceous feedstock and the oxygen-containing gas are mixed in such amounts that the resulting feed mixture has an oxygen-to-carbon ratio in the range of from 0.3 to 0.8, preferably in the range of from 0.45 to 0.75. References herein to the oxygen-to-carbon ratio refer to the ratio of oxygen in the form of molecules ($O_2$) to carbon atoms present in the hydrocarbon feedstock. Oxygen-to-carbon ratios in the region of the stoichiometric ratio of 0.5, i.e. ratios in the range of from 0.45 to 0.65, are especially preferred. If steam is present in the feed mixture, the steam-to-carbon ratio is preferably in the range of from above 0.0 to 3.0, more preferably from 0.0 to 2.0. The hydrocarbonaceous feedstock, the oxygen-containing gas and steam, if present, are preferably well mixed prior to being contacted with the catalyst bed. The feed mixture is preferably preheated prior to contacting the catalyst bed. Preferably, the composition of the feed mixture is equal in each reactor of the apparatus according to the invention.

Generally, the catalyst beds in the different reactors and the reactants supplied to the different reactors will be equal to each other. However, the apparatus according to the invention may be provided with different groups of reactors, comprising different catalyst beds and being supplied with different reactants or a different ratio of reactants.

The feed mixture is preferably contacted with the catalyst bed under adiabatic conditions. For the purposes of this specification, the term "adiabatic" is a reference to reaction conditions under which substantially all heat loss and radiation from the reaction zone are prevented, with the exception of hot gas leaving the catalyst bed.

For applications on a commercial scale, elevated pressures, that is pressures significantly above atmospheric pressure are most suitably applied in the process of the present invention. The process is typically operated at pressures in the range of from 2 to 150 bara. Preferably, the process is operated at pressures in the range of from 2 to 100 bara, especially from 5 to 50 bara.

Under the preferred conditions of high pressure prevailing in processes operated on a commercial scale, the feed mixture is preferably contacted with the catalyst bed at a temperature in the range of from 850 to 1350 °C, more preferably of from 900 to 1300 °C.

The feed mixture may be provided during the operation of the process at any suitable space velocity. It is an advantage of the process of the present invention that very high gas space velocities can be achieved. Thus, gas space velocities for the process (expressed in normal litres of gas per kilogram of catalyst per hour, wherein normal litres refers to litres under STP conditions, i.e. 0 °C and 1 atm.) are in the range of from 20,000 to 100,000,000 Nl/kg/h, more preferably in the range of from 50,000 to 50,000,000 Nl/kg/h. Space velocities in the range of from 500,000 to 30,000,000 Nl/kg/h are particularly suitable for use in the process.

## Claims

1. Apparatus suitable for the catalytic partial oxidation of a hydrocarbonaceous feedstock, comprising

   (1) a synthesis gas collection vessel, and
   (2) a manifold of reactors each comprising a mixer and a catalyst bed suitable for the partial oxidation,

   wherein the reactors are mounted on the synthesis gas collection vessel with the mixer above the catalyst bed.

2. Apparatus according to claim 1, wherein the synthesis gas collection vessel has a bottom part having an inner surface consisting of a high-temperature resistant material, preferably refractory oxide brick.

3. Apparatus according to claim 1 or 2, wherein the distance between the central longitudinal axes of adjacent reactors is less than three times the largest catalyst bed diameter, preferably less than two times the largest catalyst bed diameter, more preferably less than 1.5 times.

4. Apparatus according to claim 1 or 2, wherein the reactors are mounted in such a way that they can be replaced independently from each other.

5. Apparatus according to any of the preceding claims, further comprising means suitable for cooling synthesis gas.

6. Apparatus according to claim 5, wherein the means suitable for cooling synthesis gas is an endothermic reaction unit, preferably a steam methane reforming reaction unit.

7. Apparatus according to claim 6, wherein the steam methane reforming reaction unit comprises a plurality of tubes and is vertically mounted on the upper part of the synthesis gas collection vessel.

8. Apparatus according to claim 5, wherein the means suitable for cooling synthesis gas is a multi tubular cooler.

9. Apparatus according to claim 8, wherein the multi tubular cooler is substantially horizontally mounted on the synthesis gas collection vessel.

10. Process for the catalytic partial oxidation of a hydrocarbonaceous feedstock, which process comprises contacting each catalyst bed of the apparatus according to any of the preceding claims with a feed mixture comprising a hydrocarbonaceous feedstock and an oxygen-containing gas in amounts giving an oxygen-to-carbon ratio in the range of from 0.3 to 0.8, at a pressure in the range of from 2 to 150 bara, a temperature in the range of from 750 to 1400 °C and a gas space velocity in the range of from 20,000 to 100,000,000 Nl/kg/h.

Fig.1.

# Fig.2.

Fig.3.

Fig.4.

Fig.5.

EP 1 043 271 A1

# Fig.6.

European Patent
Office

**EUROPEAN SEARCH REPORT**

Application Number

EP 00 20 1138

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | WO 98 49095 A (EXXON RESEARCH ENGINEERING CO) 5 November 1998 (1998-11-05)<br>* claims * | 1,10 | C01B3/38<br>B01J8/02<br>C01B3/32 |
| D,A | EP 0 303 439 A (DAVY MCKEE CORP) 15 February 1989 (1989-02-15)<br>* the whole document * | 1,10 | |
| A | EP 0 442 164 A (SHELL INT RESEARCH) 21 August 1991 (1991-08-21)<br>* claims; figure * | 1,10 | |
| A | WO 97 37929 A (BASINI LUCA ;DONATI GIANNI (IT); SNAM PROGETTI (IT)) 16 October 1997 (1997-10-16)<br>* page 4, line 13 - page 8, line 14 *<br>* claims * | 1,10 | |
| D,A | WO 98 30322 A (SHELL INT RESEARCH) 16 July 1998 (1998-07-16)<br>* claims * | 1,10 | |
| D,A | WO 98 05423 A (SHELL INT RESEARCH) 12 February 1998 (1998-02-12)<br>* claims * | 1,10 | TECHNICAL FIELDS SEARCHED (Int.Cl.7)<br><br>C01B<br>B01J |

The present search report has been drawn up for all claims

| Place of search | Date of completion of the search | Examiner |
|---|---|---|
| THE HAGUE | 6 July 2000 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 043 271 A1

**ANNEX TO THE EUROPEAN SEARCH REPORT**
**ON EUROPEAN PATENT APPLICATION NO.**

EP 00 20 1138

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2000

| Patent document cited in search report | | Publication date | Patent family member(s) | | | Publication date |
|---|---|---|---|---|---|---|
| WO 9849095 | A | 05-11-1998 | AU | 7143498 | A | 24-11-1998 |
| | | | NO | 995210 | A | 15-12-1999 |
| | | | ZA | 9803117 | A | 22-10-1998 |
| EP 0303439 | A | 15-02-1989 | US | 4865820 | A | 12-09-1989 |
| | | | AT | 81490 | T | 15-10-1992 |
| | | | AU | 604956 | B | 03-01-1991 |
| | | | AU | 2098888 | A | 16-02-1989 |
| | | | BR | 8804104 | A | 02-05-1989 |
| | | | CA | 1314129 | A | 09-03-1993 |
| | | | CN | 1033753 | A,B | 12-07-1989 |
| | | | DE | 3875305 | A | 19-11-1992 |
| | | | DE | 3875305 | T | 25-02-1993 |
| | | | DK | 453288 | A | 15-02-1989 |
| | | | GR | 3006155 | T | 21-06-1993 |
| | | | IN | 171676 | A | 05-12-1992 |
| | | | JP | 1159037 | A | 22-06-1989 |
| | | | JP | 2752383 | B | 18-05-1998 |
| | | | KR | 9609153 | B | 16-07-1996 |
| | | | MX | 165662 | B | 27-11-1992 |
| | | | NO | 883606 | A,B, | 15-02-1989 |
| | | | NZ | 225814 | A | 27-03-1990 |
| | | | SU | 1711659 | A | 07-02-1992 |
| | | | ZA | 8805993 | A | 25-04-1990 |
| EP 0442164 | A | 21-08-1991 | AU | 633675 | B | 04-02-1993 |
| | | | AU | 6923091 | A | 11-07-1991 |
| | | | CA | 2033790 | A | 11-07-1991 |
| | | | DE | 69002452 | D | 02-09-1993 |
| | | | DE | 69002452 | T | 18-11-1993 |
| | | | DK | 442164 | T | 11-10-1993 |
| | | | JP | 4215835 | A | 06-08-1992 |
| | | | NO | 176750 | B | 13-02-1995 |
| WO 9737929 | A | 16-10-1997 | IT | MI960690 | A | 13-10-1997 |
| | | | AU | 2384597 | A | 29-10-1997 |
| | | | DE | 69702190 | D | 06-07-2000 |
| | | | EP | 0892760 | A | 27-01-1999 |
| | | | NO | 984735 | A | 08-12-1998 |
| WO 9830322 | A | 16-07-1998 | AU | 6093598 | A | 03-08-1998 |
| | | | EP | 0951345 | A | 27-10-1999 |
| | | | NO | 993339 | A | 02-09-1999 |
| | | | PL | 334445 | A | 28-02-2000 |
| WO 9805423 | A | 12-02-1998 | AU | 712642 | B | 11-11-1999 |

EPO FORM P0459

For more details about this annex : see Official Journal of the European Patent Office, No. 12/82

16

## ANNEX TO THE EUROPEAN SEARCH REPORT
## ON EUROPEAN PATENT APPLICATION NO.

EP 00 20 1138

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2000

| Patent document cited in search report | Publication date | Patent family member(s) | | Publication date |
|---|---|---|---|---|
| WO 9805423 A | | AU | 4204597 A | 25-02-1998 |
| | | CN | 1227510 A | 01-09-1999 |
| | | DE | 69701402 D | 13-04-2000 |
| | | EP | 0915735 A | 19-05-1999 |
| | | NO | 990524 A | 04-02-1999 |

EPO FORM P0459

For more details about this annex : see Official Journal of the European Patent Office, No. 12/82